# EUROPÄISCHE PATENTSCHRIFT

(11) **EP 3 419 796 B1**
(45) Veröffentlichungstag und Bekanntmachung des Hinweises auf die Patenterteilung: **22.06.2022**
(21) Anmeldenummer: 17718964.4
(22) Anmeldetag: 27.04.2017
(51) Int. Cl.: B25J 19/00, B25J 17/02, B25J 9/04, B25J 9/12, B25J 9/10

(54) **MOTORISIERTES GELENK FÜR EINEN PROGRAMMIERBAREN BEWEGUNGSAUTOMATEN**
MOTORIZED JOINT FOR A PROGRAMMABLE MOVING MACHINE
ARTICULATION MOTORISÉE POUR UN AUTOMATE DE DÉPLACEMENT PROGRAMMABLE

(30) Priorität: 27.04.2016 LU 93045
(43) Veröffentlichungstag der Anmeldung: 02.01.2019
(73) Patentinhaber: Ovalo GmbH, 65555 Limburg (DE)
(72) Erfinder: GILGES, Siegmar, 65307 Bad Schwalbach (DE)
(74) Vertreter: Hoffmann, Jürgen
(86) Internationale Anmeldenummer: PCT/EP2017/060049
(87) Internationale Veröffentlichungsnummer: WO 2017/186845

(56) Entgegenhaltungen:
- EP-A1- 0 112 963
- EP-A2- 0 146 783
- WO-A1-2013/138912
- WO-A1-2015/115324
- WO-A1-2017/012626

## Beschreibung

Die Erfindung betrifft ein motorisiertes Gelenk zum Verbinden von zwei relativ zueinander beweglichen Trägern eines programmierbaren Bewegungsautomaten, das einen Antriebsmotor und eine Feststellvorrichtung aufweist, die in einen Arretierzustand, in dem die Feststellvorrichtung das Gelenk arretiert, oder alternativ in einen Freigabezustand, in dem die Feststellvorrichtung das Gelenk nicht arretiert, umschaltbar ist, und das eine Energieleitung aufweist, die von außen zugeführte Energie zum Betreiben und/oder Steuern der Feststellvorrichtung und/oder des Antriebsmotors transportiert, wobei das motorisierte Gelenk wenigstens einen an die Feststellvorrichtung angeschlossenen oder anschließbaren Energiespeicher beinhaltet, und wobei die Feststellvorrichtung zum Bewirken wenigstens eines Umschaltvorganges von dem Arretierzustand in den Freigabezustand oder von dem Freigabezustand in den Arretierzustand mit wenigstens einem Teil der in dem Energiespeicher gespeicherten Energie beaufschlagbar ist, oder wobei die Feststellvorrichtung mit wenigstens einem Teil der in dem Energiespeicher gespeicherten Energie beaufschlagbar ist, um die Feststellvorrichtung in dem Arretierzustand oder in dem Freigabezustand zu halten, und wobei die Feststellvorrichtung dazu ausgebildet ist, unmittelbar ein, insbesondere rotierbar gelagertes, Bauteil des motorisierten Gelenks zu arretieren.

Aus US 8,614,559 B2 ist ein programmierbares Robotersystem bekannt. Das Robotersystem beinhaltet einen Roboter mit einer Anzahl von einzelnen Armabschnitten, wobei benachbarte Armabschnitte jeweils durch ein Gelenk miteinander verbunden sind. Das Robotersystem umfasst ferner in wenigstens einem Gelenk einen steuerbaren Antrieb sowie ein Steuersystem zum Steuern der Antriebe. Das Robotersystem weist außerdem eine Benutzerschnittstelle auf, über die das Robotersystem programmiert werden kann. Das Gelenk weist ein Gehäuse und einen in dem Gehäuse angeordneten Motor mit einer Motorwelle auf, die relativ zu dem Gehäuse rotiert. In dem Gehäuse befindet sich außerdem eine Sicherheitsbremse, die eine mittels eines Elektromagneten aktivierbare Sperrklinke aufweist. Die Sperrklinke greift in der aktivierten Stellung in ein unmittelbar mit der Motorwelle reibschlüssig verbundenes Bauteil ein.

EP 146 783 A2 offenbart einen elektrischen Aktuator, dem ein Drehmelder zugeordnet ist. Der Aktuator umfasst ein stationäres und ein drehbares Gehäuse mit einem Elektromotor darin. Der Elektromotor treibt das drehbare Gehäuse durch einen geschwindigkeitsreduzierenden Harmonic-Drive-Antriebsmechanismus an. Der Aktuator hat eine Öffnung in dem Drehgehäuse und einen Hohlraum innerhalb der Öffnung mit einem passenden Verankerungselement, das mit dem stationären Gehäuse verbunden ist. Der modulare Drehmelder weist eine Form und Größe, die einen Teil des Hohlraums in dem Aktuator ausfüllt, und ein Bauteil, das in ein korrespondierendes Bauteil des stationären Gehäuses nach dem Zusammenbau des Drehmelders mit dem Aktuator eingreift, auf. Der drehbare Teil des Drehmelders ist am Drehgehäuse befestigt. Der Aktuator weist ein Wärmeableitungssystem und eine elektromagnetische Bremse, um eine Drehung des Drehgehäuses zu verhindern, auf. Außerdem weist der Aktuator eine Kupplung zwischen dem festen und dem drehenden Teil des Drehmelders auf.

EP 0 112 963 A1 offenbart einen Drehstellantrieb mit einem Harmonic-Drive-Getriebe mit einem durchgängig hohlen, zylindrischen, starren, runden Verzahnungsteil, das an einem Axialende durch ein Stützteil geschlossen ist und am entgegengesetzten Ende offen ist und eine Innenverzahnung aufweist, die am offenen axialen Endabschnitt des starren Verzahnungsteils angeordnet ist, mit einem durchgängig becherförmigen elastischen Verzahnungsteil mit einer Außenverzahnung, die an einem axialen Ende des Verzahnungsteils ausgebildet ist, und einer Ausgangswelle, die an das entgegengesetzte axiale Ende des Verzahnungsteils befestigt ist, so daß sie sich in der dem einen axialen Ende entgegengesetzten Axialrichtung erstreckt, wobei das elastische Verzahnungsteil mit dem einen axialen Abschnitt in den entgegengesetzten axialen Endabschnitt des starren, runden Verzahnungsteils eingesetzt ist, so daß das starre und das runde Verzahnungsteil eine geschlossene Kammer ausbilden. Das Harmonic-Drive-Getriebe weist eine Wellengenerator auf, der so in der Kammer angeordnet ist, daß er derart auf das elastische Verzahnungsteil einwirkt, daß ein Teileingriff zwischen Außen- und Innenverzahnung bewirkt wird. der Drehstellantrieb weist außerdem einen Motor, der in der Kammer angeordnet ist, und eine elektromagnetische Bremse, die so in der Kammer angeordnet ist, daß sie auf den Motor einwirkt, auf.

Es ist die Aufgabe der vorliegenden Erfindung, ein motorisiertes Gelenk für einen programmierbaren Bewegungsautomaten anzugeben, das besonders sicher betreibbar ist.

Die Aufgabe wird durch ein motorisiertes Gelenk gelöst, das dadurch gekennzeichnet ist, dass die Feststellvorrichtung im Arretierzustand bei Auftreten eines Drehmomentes an dem Bauteil mit einem Wert über einem vorgegebenen oder vorgebbaren Wert zur Vermeidung einer Beschädigung des Bauteiles und der weiteren im Kraftfluss liegenden Bauteile des motorisierten Gelenks eine Bewegung des arretierten Bauteils zulässt.

Die Erfindung hat den ganz besonderen Vorteil, dass das Gelenk auch nach Eintreten eines Fehlerfalles, nämlich beispielsweise wenn die von außen über die Energieleitung verlaufende Energieversorgung unterbrochen ist, - je nach Anforderung und insbesondere auch automatisch - arretiert oder freigegeben werden kann. Beispielsweise ermöglicht es die Erfindung, eine unkontrollierte und ungewollte Bewegung der mittels des Gelenks verbundenen Träger im Fall eines Abrisses eines oder mehrerer der zu dem Gelenk verlaufenden Kabel zu verhindern, indem die Feststellvorrichtung, insbesondere automatisch, unter Verwendung der in dem Energiespeicher gespeicherten Energie von dem Freigabezustand in den Arretierzustand geschaltet wird, was weiter unten noch im Detail erläutert ist. Es ist bei einer anderen Ausführung auch möglich, die Feststellvorrichtung mittels der in dem Energiespeicher gespeicherten Energie in einem Fehlerfall in dem aktuellen Zustand zu halten.

Die Feststellvorrichtung ist insbesondere dazu ausgebildet und angeordnet, unmittelbar ein, insbesondere rotierbar gelagertes, Bauteil des motorisierten Gelenks zu arretieren.

Außerdem lässt die Feststellvorrichtung im Arretierzustand bei Auftreten eines Drehmomentes an dem zu arretierenden Bauteil mit einem Wert über einem vorgegebenen oder vorgebbaren Wert zur Vermeidung einer Beschädigung des Bauteiles und der weiteren im Kraftfluss liegenden Bauteile des motorisierten Gelenks eine Bewegung des arretierten Bauteils zu.

Dies hat den ganz besonderen Vorteil, dass Drehmomentspitzen, die auf das Zwischenelement, das Abtriebselement oder die weiteren im Kraftfluss liegenden Bauteile wirken, abgebaut werden können, ohne dass es zu einer Beschädigung des motorisierten Gelenks kommt. Zu derartigen Drehmomentspitzen kann es insbesondere im Arretierzustand der Feststellvorrichtung kommen, wenn äußere Kräfte auf die mittels des motorisierten Gelenks verbundenen Träger einwirken. Auf diese Weise kann vorteilhaft eine Beschädigung des motorisierten Gelenks, insbesondere des Getriebes des motorisierten Gelenks, vermieden werden, ohne dass das motorisierte Gelenk, und insbesondere die Elemente des Getriebes, vorsorglich überdimensioniert werden müssten, um die oben genannten Drehmomentspitzen verkraften zu können. Insoweit kann das motorisierte Gelenk - und insbesondere dessen Getriebe - vorteilhaft bei gleicher Lebensdauer seiner Komponenten kompakt, kleinbauend und bauraumsparend ausgebildet werden. Der vorgegebene Wert ist vorzugsweise kleiner, als das maximal zulässige oder maximal zugelassene Abtriebsmoment des Getriebes. Insbesondere ist der vorgegebene Wert vorzugsweise derart gewählt, dass eine Beschädigung des Gelenks und/oder des Getriebes ausgeschlossen ist.

Der Energiespeicher kann dazu ausgebildet sein, elektrische Energie zu speichern. Beispielsweise kann der Energiespeicher als Akku oder als Batterie oder als Kondensator ausgebildet sein. Bei einer besonderen Ausführung ist eine elektronische Steuerungsvorrichtung vorhanden, die die Feststellvorrichtung im Bedarfsfall mit elektrischer Energie aus dem zum Speichern elektrischer Energie ausgebildeten Energiespeicher beaufschlagt. Hierzu kann die Steuerungsvorrichtung wenigstens einen Schalter beinhalten, wobei durch Schließen des Schalters eine elektrische Verbindung zwischen dem Energiespeicher und der Feststellvorrichtung herstellbar ist.

Bei einer besonderen Ausführung ist der Energiespeicher dazu ausgebildet, Energie mechanisch zu speichern. Beispielsweise kann der Energiespeicher wenigstens eine Feder aufweisen, um Energie in Form von Spannenergie zu speichern. Die Feder kann insbesondere in der Weise angeschlossen sein, dass sie beim Umschalten der Feststellvorrichtung mittels einer über die Energieleitung betriebenen Umschaltvorrichtung, die beispielsweise ein Hubmagnet sein kann, gespannt wird. Insbesondere kann außerdem ein zusätzlicher Energiespeicher, insbesondere zum Speichern elektrischer Energie, vorhanden sein, mit dessen gespeicherter Energie die Umschaltvorrichtung, insbesondere ein Hubmagnet, im Falle der Unterbrechung der Energieleitung wenigstens für einen Umschaltvorgang betreibbar ist.

Auch bei einer Ausführung mit einem Energiespeicher, der dazu ausgebildet ist, Energie mechanisch zu speichern, kann vorteilhaft eine mechanische und/oder elektronisch arbeitende Steuerungsvorrichtung, vorhanden sein, die die Feststellvorrichtung im Bedarfsfall unter Verwendung der gespeicherten Energie umschaltet.

Vorzugsweise ist die Steuerungsvorrichtung mit Energie aus dem Energiespeicher betrieben oder betreibbar. Eine solche Ausführung hat den besonderen Vorteil, dass die Steuerungsvorrichtung auch im Fehlerfall, nämlich insbesondere wenn die Energieversorgung über die Energieleitung unterbrochen ist, noch arbeiten und einen Umschaltvorgang bewirken kann. Alternativ ist es zu diesem Zweck auch möglich, dass zum Betreiben der Steuerungsvorrichtung ein weiterer Energiespeicher vorhanden ist.

Bei einer besonderen Ausführung kann die Feststellvorrichtung unter Verwendung der in dem Energiespeicher gespeicherten Energie umgeschaltet werden, wenn eine Energiezufuhr über die Energieleitung unterbrochen ist. Beispielsweise kann eine Unterbrechung der Energiezufuhr durch einen Abriss eines oder mehrerer Zuleitungskabel zum Gelenk hervorgerufen sein.

Bei einer ganz besonders vorteilhaften Ausführung weist das motorisierte Gelenk eine Steuerungsvorrichtung auf, die die Feststellvorrichtung automatisch unter Verwendung der in dem Energiespeicher gespeicherten Energie umschaltet, sobald die Energiezufuhr über die Energieleitung zu der Feststellvorrichtung und/oder zu dem Antriebsmotor unterbrochen wird. Je nach Anwendungsfall kann automatisch ein Umschalten in den Arretierzustand oder in den Freigabezustand erfolgen. Durch ein automatisches Umschalten in den Arretierzustand können im Fehlerfall beispielsweise unkontrollierte und/oder ungewollte Bewegungen der mittels des Gelenks verbundenen Träger automatisch verhindert werden. Es ist beispielsweise auch möglich, im Fehlerfall ein unerwünschtes Verharren der Träger in einer eingestellten Position zu verhindern, indem ein automatisches Umschalten in den Freigabezustand erfolgt.

Insbesondere kann vorteilhaft vorgesehen sein, dass eine Steuerungsvorrichtung die Feststellvorrichtung automatisch unter Verwendung der in dem Energiespeicher gespeicherten Energie von dem Freigabezustand in den Arretierzustand umschaltet, sobald die Energiezufuhr über die Energieleitung zu der Feststellvorrichtung und/oder zu dem Antriebsmotor unterbrochen wird. Es ist insbesondere auch möglich, dass eine Steuerungsvorrichtung die Feststellvorrichtung automatisch unter Verwendung der in dem Energiespeicher gespeicherten Energie von dem Arretierzustand in den Freigabezustand umschaltet, sobald die Energiezufuhr über die Energieleitung zu der Feststellvorrichtung und/oder zu dem Antriebsmotor unterbrochen wird.

Insbesondere ist es auch möglich, dass im Fehlerfall zeitlich beabstandet mehrere Umschaltvorgänge erfolgen. Beispielsweise kann vorgesehen sein, dass das Gelenk, insbesondere automatisch, zunächst arretiert wird, um unkontrollierte und/oder ungewollte Bewegungen der mittels des Gelenks verbundenen Träger zu verhindern, und dass zeitlich danach, zum Beispiel für einen Reparaturvorgang, ein weiteres Umschalten in den Freigabezustand unter Verwendung der gespeicherten Energie erfolgt.

Bei einer besonderen Ausführung ist die Feststellvorrichtung als bistabile Feststellvorrichtung ausgebildet. Dies bedeutet, dass die Feststellvorrichtung von selbst solange in dem jeweils eingestellten Zustand verbleibt, bis sie aktiv umgeschaltet wird. Die Feststellvorrichtung kann vorteilhaft insbesondere derart ausgebildet sein, dass sie unabhängig von einer Stromversorgung bistabil ist. Dies beispielsweise dadurch, dass ein eingestellter Schaltzustand (Verriegelungsstellung oder Freigabestellung) von einer Permanentmagnetanordnung und/oder einer Federvorrichtung zuverlässig solange erhalten wird, bis das Verriegelungsbauteil wieder in den jeweils anderen Schaltzustand umgeschaltet wird.

Die Feststellvorrichtung kann insbesondere ein Bauteil des Antriebsmotors oder, in besonders vorteilhafter Weise, ein Bauteil eines dem Antriebsmotor nachgeschalteten Getriebes arretieren.

Insbesondere für eine solche Ausführung kann die Feststellvorrichtung vorteilhaft ein bewegliches Verriegelungsbauteil aufweisen, das mit einer Umschaltvorrichtung wahlweise in eine Verriegelungsstellung, in der es mit dem zu blockierenden Rotationsbauteil in Wirkverbindung steht, oder in eine Freigabestellung überführbar ist.

Hierbei kann vorteilhaft insbesondere vorgesehen sein, dass die Umschaltvorrichtung für einen Umschaltvorgang mittelbar über ein Übertragungselement, das entlang eines Übertragungselementweges beweglich gelagert ist, eine Kraft auf das Verriegelungsbauteil ausübt. Eine Ausführung, bei der das Verriegelungsbauteil nicht direkt von der Umschaltvorrichtung bewegt wird, sondern mittelbar über ein Übertragungselement, das entlang eines Übertragungselementweges beweglich gelagert ist, kann vorteilhaft eine Entkopplung von Kräften erreicht werden, die die Verriegelungsvorrichtung verklemmen können oder sogar zu Beschädigungen führen können.

Bei einer besonders vorteilhaften Ausführung ist das Übertragungselement derart mit dem Verriegelungsbauteil verkoppelt oder verkoppelbar, dass von dem Verriegelungsbauteil keine Kräfte quer zum Übertragungselementweg auf das Übertragungselement und/oder auf die Umschaltvorrichtung übertragbar sind. Dies kann beispielsweise durch eine geeignete gelenkige Verbindung, die in Querrichtung eine Verschiebung des Verriegelungsbauteils relativ zu dem Übertragungselement zulässt, realisiert sein.

Bei einer besonderen Ausführung weist die Feststellvorrichtung eine Permanentmagnetanordnung auf, die das Verriegelungsbauteil nach einem Umschaltvorgang, bei dem von der Freigabestellung in die Verriegelungsstellung geschaltet wurde, in der Verriegelungsstellung hält und/oder die das Verriegelungsbauteil nach einem Umschaltvorgang, bei dem von der Verriegelungsstellung in die Freigabestellung geschaltet wurde, in der Freigabestellung hält. Zusätzlich kann auch vorgesehen sein, dass die Umschaltvorrichtung bei einem Umschaltvorgang dem von der Permanentmagnetanordnung verursachten Magnetfeld ein Umschaltmagnetfeld überlagert.

Bei einer zuverlässig arbeitenden Ausführung sind die Feldlinien des Umschaltmagnetfelds - wenigstens räumlich partiell - entgegengesetzt zu den Feldlinien des von der Permanentmagnetanordnung verursachten Magnetfeldes ausgerichtet. Alternativ oder zusätzlich kann auch vorgesehen sein, dass das Umschaltmagnetfeld bei einem Umschaltvorgang das von der Permanentmagnetanordnung verursachten Magnetfeld wenigstens räumlich partiell aufhebt. Auf diese Weise wird erreicht, dass die das Verriegelungsbauteil in der jeweiligen Schaltstellung haltenden Kräfte kompensiert werden können, so dass von der Umschaltvorrichtung ausgeübte Umschaltkräfte das Verriegelungsbauteil in die jeweils andere Schaltstellung bewegen können. Beispielsweise kann das Umschaltmagnetfeld die für die Umschaltbewegung erforderlichen Umschaltkräfte bewirken.

Das Übertragungselement kann beispielsweise als, insbesondere linear, beweglich gelagerter Stößel ausgebildet sein. Dieser kann innerhalb der Spule eines Elektromagneten der Umschaltvorrichtung angeordnet sein. Insbesondere kann das Verriegelungsbauteil als drehbar oder schwenkbar gelagerter Hebel ausgebildet sein, der mittels des Stößels von einer Schaltstellung in die andere Schaltstellung bewegt wird.

Die Feststellvorrichtung kann vorteilhaft als reibschlüssige Bremse ausgebildet sein oder zumindest eine reibschlüssige Bremse aufweisen. Hierdurch kann in einfacher und zuverlässiger Weise das zu arretierende Bauteil in Stillstand gehalten werden, wobei jedoch beim Auftreten von besonders hohen Drehmomenten, insbesondere von Drehmomenten die einen vorgegebenen Wert überschreiten, ein Durchrutschen der reibschlüssigen Bremse erfolgt, so dass das zu arretierende Bauteil und die weiteren im Kraftfluss liegenden Bauteile des Gelenks, insbesondere des Antriebsmotors und/oder des Getriebes, vor einer Beschädigung bewahrt bleiben.

Beispielsweise kann die Feststellvorrichtung eine Scheibenbremse aufweisen. Bei einer vorteilhaften Ausführung weist die Scheibenbremse eine Bremsscheibe auf, die drehfest mit dem zu arretierenden Bauteil verbunden ist. Darüber hinaus kann ein Bremskrafterzeuger vorhanden sein, der auf die Bremsscheibe wirkt und der sich direkt oder indirekt an einem Gehäuse oder an einem Chassis des Getriebes und/oder des motorisierten Gelenks abstützt. Die Bremsscheibe kann vorteilhaft drehfest, jedoch in axialer Richtung verschiebbar auf einem mit dem zu arretierenden Bauteil oder auf einem mit dem zu arretierenden Bauteil verbundenen Bauteil verbundenen Mitnehmer gelagert sein.

Der Bremskrafterzeuger kann beispielsweise in der Weise ausgebildet sein, dass er im Arretierzustand der Feststellvorrichtung ein Reibelement axial oder radial gegen die Bremsscheibe drückt. Insbesondere hierzu kann der Bremskrafterzeuger wenigstens einen Magneten, insbesondere einen Permanentmagneten und/oder einen Elektromagneten und/oder wenigstens ein Federelement aufweisen.

Bei einer besonderen Ausführung ist zum Lösen der Feststellvorrichtung eine, insbesondere elektrisch aktivierbare, Lösevorrichtung vorhanden. Beispielsweise kann die Lösevorrichtung einen Elektromagneten aufweisen, mittels dem das Reibelement von der Bremsscheibe, insbesondere gegen die Rückstellkraft eines Bremskrafterzeugers, entfernt werden kann.

Bei einer ganz besonders vorteilhaften Ausführung weist die Feststellvorrichtung ein Sperrmittel auf, das reibschlüssig mit dem zu arretierenden Bauteil oder einem mit dem zu arretierenden Bauteil verbundenen Bauteil verbunden ist. Das Sperrmittel kann vorteilhaft ein Formschlussmittel aufweisen, das im Arretierzustand der Feststellvorrichtung formschlüssig mit einem relativ zu einem Gehäuse oder einem Chassis des motorisierten Gelenks, insbesondere einem Gehäuse oder einem Chassis des Getriebes des motorisierten Gelenks, drehfesten Gegenformschlussmittel zusammenwirkt. Das Sperrmittel kann beispielsweise als Ring ausgebildet sein, der als Formschlussmittel wenigstens eine Ausnehmung aufweist, in die das Gegenformschlussmittel, beispielsweise in Form eines ausfahrbaren Sperrstifts, eingreifen kann. In vorteilhafter Weise kann das Sperrmittel mehrere Formschlussmittel, beispielsweise mehrere Ausnehmungen, aufweisen, so dass ein Eingreifen des Gegensperrmittels in unterschiedlichen Drehstellungen des abzubremsenden Getriebebauteils ermöglicht ist.

Das Sperrmittel kann vorteilhaft, beispielsweise als Ring, koaxial zu dem zu arretierenden Bauteil angeordnet sein.

Insbesondere kann vorteilhaft vorgesehen sein, dass das Gegenformschlussmittel, beispielsweise in Form eines ausfahrbaren Sperrstifts, radial relativ zum Sperrmittel angeordnet ist und/oder in radialer Richtung beweglich angeordnet ist. Hierbei kann das Sperrmittel wenigstens ein radial ausgerichtetes Formschlussmittel, beispielsweise eine in Radialrichtung offene Rastausnehmung, aufweisen, in die das Gegenformschlussmittel im Arretierzustand der Feststellvorrichtung formschlüssig eingreift.

Zum Erzeugen oder zum Erhöhen der Reibkraft zwischen dem Sperrmittel einerseits und dem zu arretierenden Bauteil oder einem mit dem zu arretierenden Bauteil drehfest verbundenen Bauteil andererseits kann vorteilhaft ein Vorspannmittel vorhanden sein. Beispielsweise kann das Vorspannmittel in der Weise ausgebildet sein, dass es das Sperrmittel, insbesondere axial, gegen das zu arretierende Bauteil oder ein mit dem zu arretierenden Bauteil drehfest verbundenes Bauteil drückt.

Alternativ kann beispielsweise auch vorgesehen sein, dass das Sperrmittel über das Vorspannmittel reibschlüssig mit dem zu arretierenden Bauteil oder einem mit dem zu arretierenden Bauteil drehfest verbundenen Bauteil verbunden ist und sich das Vorspannmittel einerseits an dem Sperrmittel und andererseits an dem zu arretierenden Bauteil oder einem mit dem zu arretierenden Bauteil drehfest verbundenen Bauteil abstützt. Das Vorspannmittel kann beispielsweise wenigstens ein vorgespanntes oder vorspannbares Federelement beinhalten.

Insbesondere kann das Vorspannmittel vorteilhaft als einstellbares Vorspannmittel ausgebildet sein. Hierzu kann beispielsweise eine Spannschraube vorhanden sein, mittels der die Vorspannung der Feder eingestellt werden kann. Insbesondere kann das Vorspannmittel wenigstens ein Federelement aufweisen, wobei wenigstens ein Teil der Reibkraft durch eine Rückstellkraft des vorgespannten Federelements bewirkt wird.

Das Vorspannmittel kann beispielsweise eine Tellerfeder aufweisen. Bei einer ganz besonders vorteilhaften Ausführung weist das Vorspannmittel ein gewelltes und/oder elastisches und/oder zylinderförmig gebogenes Band, insbesondere Blechband, auf. Das Band kann insbesondere radial zwischen dem Sperrmittel einerseits und dem zu arretierenden Bauteil oder einem mit dem zu arretierenden Bauteil drehfest verbundenen Bauteil andererseits angeordnet sein. Solange ein vorgegebener Wert des Drehmoments nicht überschritten wird, stellt das vorgespannte Band reibschlüssig eine drehfeste Verbindung zwischen dem Sperrmittel einerseits und dem zu arretierenden Bauteil oder dem mit dem zu arretierenden Bauteil drehfest verbundenen Bauteil andererseits her. Wird der vorgegebene Wert überschritten, kann sich das Sperrelement die Reibkraft überwindend relativ zu dem zu arretierenden Bauteil oder einem mit dem zu arretierenden Bauteil drehfest verbundenen Bauteil drehen. In ähnlicher Weise kann das Vorspannmittel alternativ auch als vorgespannter, geschlitzter Ring ausgebildet und angeordnet sein.

Wie bereits erwähnt, kann vorteilhaft vorgesehen sein, dass das Gegenformschlussmittel einen, insbesondere entlang seiner Längserstreckungsrichtung radial oder axial, bewegbaren Sperrstift aufweist, dessen freies Ende in dem Arretierzustand der Feststellvorrichtung in eine Rastausnehmung des Formschlussmittels eingreift.

Wie bereits erwähnt kann dem Antriebsmotor ein Getriebe triebtechnisch nachgeschaltet sein. Bei einer ganz besonders vorteilhaften Ausführung ist das Getriebe als Spannungswellengetriebe ausgebildet. Eine solche Ausführung hat den ganz besonderen Vorteil, dass ein besonders präzises Einstellen der beweglichen Träger relativ zueinander ermöglicht ist. Hierbei wird vorteilhaft ausgenutzt, dass Spannungswellengetriebe spielfrei sind und daher die vom Antriebsmotor erzeugten Drehmomente, insbesondere auch bei einer Richtungsumkehr, unmittelbar in eine entsprechende Relativbewegung der Träger übersetzt werden können. Alternativ kann das Getriebe beispielsweise als Planetengetriebe oder als Zykloidgetriebe ausgebildet sein.

Insbesondere kann vorteilhaft vorgesehen sein, dass die Feststellvorrichtung dazu ausgebildet und angeordnet ist, unmittelbar ein, insbesondere rotierbar gelagertes, Getriebebauteil zu arretieren. Eine solche Ausführung hat den ganz besonderen Vorteil, dass ein präzises Arretieren der mittels des Gelenks verbundenen Träger möglich ist, wobei die Bewegungsenergie der sich relativ zueinander bewegenden Träger und die Rotationsenergie der rotierenden Getriebebauteile unmittelbar und insbesondere unter Ausschluss der Abtriebswelle des Antriebsmotors, beispielsweise in ein Chassis oder ein Gehäuse, abgeleitet werden können. Die Abtriebswelle des Antriebsmotors ist auf diese Weise bei einem Abbremsvorgang zumindest teilweise von diesbezüglichen Kraft- und/oder Drehmomenteinwirkungen entkoppelt und kann daher dünner, leichter und besonders bauraumsparend ausgebildet sein.

Das zu arretierende Bauteil kann beispielsweise ein Wellengenerator des Spannungswellengetriebes sein. Es ist auch möglich, dass das Spannungswellengetriebe eine radialflexible, außenverzahnte Büchse aufweist, die mit einem starren, innenverzahnten Hohlrad, das als Abtriebselement fungiert, an wenigstens zwei Eingriffsstellen in Zahneingriff steht. Ein solches Spannungswellengetriebe kann insbesondere als Ringgetriebe ausgebildet sein.

Alternativ ist es beispielsweise auch möglich, dass das Spannungswellengetriebe als Abtriebselement eine radialflexible, außenverzahnte Büchse als arretierbares Bauteil und als Abtriebselement aufweist, die mit einem starren, innenverzahnten Hohlrad an wenigstens zwei Eingriffsstellen in Zahneingriff steht. Ein solches Spannungswellengetriebe kann vorteilhaft als Topfgetriebe ausgebildet sein, wobei die radialflexible, außenverzahnte Büchse durch die Wandung eines Flextopfes gebildet ist.

Ganz allgemein kann vorteilhaft vorgesehen sein, dass das mittels der Feststellvorrichtung arretierbare Getriebebauteil ein Wellengenerator des Spannungswellengetriebes ist oder dass das mittels der Feststellvorrichtung arretierbare Getriebebauteil ein Flexspline des Spannungswellengetriebes ist oder dass das mittels der Feststellvorrichtung arretierbare Getriebebauteil ein Circularspline oder ein Dynamicspline des Spannungswellengetriebes ist.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an das Abtriebselement des Getriebes angekoppelt ist. Die zwei mittels des motorisierten Gelenks beweglich verbundenen Träger können beispielsweise Teil eines Roboterarmes sein.

Bei einer besonderen Ausführung ist das Gelenk dazu ausgebildet, zwei Träger derart zu verbinden, dass die Ebene, in der sich einer der Träger bewegt, und die Ebene, in der sich der andere Träger bewegt, stets parallel zueinander angeordnet sind. Bei einer anderen Ausführung ist das Gelenk dazu ausgebildet, zwei Träger derart zu verbinden, dass die Ebene, in der sich einer der Träger bewegt, stets senkrecht zu dem anderen Träger angeordnet ist.

Insbesondere kann das Gelenk als Scharniergelenk ausgebildet sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines motorisierten Gelenks zum Verbinden von zwei relativ zueinander beweglichen Trägern,
- Fig. 2: ein zweites Ausführungsbeispiel eines motorisierten Gelenks zum Verbinden von zwei relativ zueinander befindlichen Trägern,
- Fig. 3: ein drittes Ausführungsbeispiel zum Verbinden von zwei relativ zueinander beweglichen Trägern,
- Fig. 4: ein viertes Ausführungsbeispiel eines motorisierten Gelenks zum Verbinden von zwei relativ zueinander beweglichen Trägern, und
- Fig. 5: ein fünftes Ausführungsbeispiel eines motorisierten Gelenks zum Verbinden von zwei relativ zueinander beweglichen Trägern.

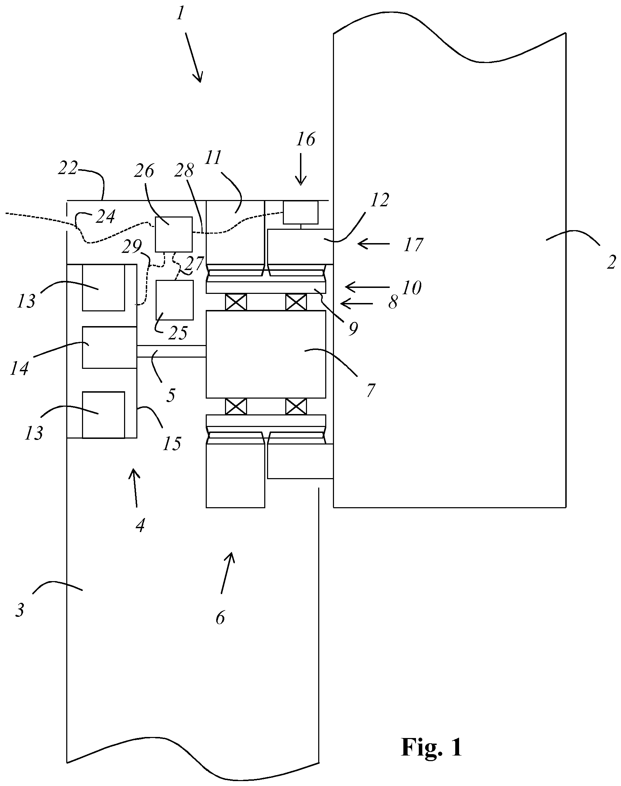

Figur 1 zeigt ein erstes Ausführungsbeispiel eines motorisierten Gelenks 1 zum Verbinden eines ersten Trägers 2 relativ zu einem zweiten Träger 3 eines programmierbaren Bewegungsautomaten. Das motorisierte Gelenk beinhaltet einen Antriebsmotor 4 mit einer Abtriebswelle 5, sowie ein dem Antriebsmotor 4 triebtechnisch nachgeschaltes Getriebe 6. Das Getriebe 6 ist als Spannungswellengetriebe ausgebildet.

Das Getriebe 6 weist ein drehfest mit der Abtriebswelle 5 des Antriebsmotors 4 verbundenes Antriebselement 7, nämlich einen Wellengenerator, auf. Der Wellengenerator ist mittels eines radialflexiblen Wälzlagers 8 in einer radialflexiblen, außenverzahnten Büchse 9 gelagert, die ein Zwischenelement 10 des Getriebes 6 bildet. Das Antriebselement 7 ist elliptisch ausgebildet und überträgt seine elliptische Form über das radialflexible Wälzlager 8 auf die radialflexible außenverzahnte Büchse 9, die auf einander gegenüberliegenden Seiten entlang der Hochachse der Ellipse in Zahneingriff mit einem ersten, starren, innenverzahnten Stützring 11 steht. Der erste Stützring 11 ist drehfest mit dem zweiten Träger 3 und einem Gehäuse 22 des motorisierten Gelenks verbunden. Der erste Stützring 11 kann insbesondere dieselbe Zähnezahl aufweisen, wie die radialflexible, außenverzahnte Büchse 9.

Darüber hinaus weist das Getriebe 6 einen zweiten starren, innenverzahnten Stützring 12 auf, der ebenfalls in Zahneingriff mit der radialflexiblen außenverzahnten Büchse 9 steht. Der zweite Stützring 12 weist eine höhere Anzahl von Zähnen auf, als die radialflexible außenverzahnte Büchse 9, so dass es bei einer Drehung des Antriebselements 7 automatisch zu einer Relativdrehung des zweiten Stützrings 12 relativ zu der radialflexiblen außenverzahnten Büchse 9 kommt.

Der zweite Stützring 12 ist drehfest mit dem ersten beweglichen Träger 2 verbunden.

Der Antriebsmotor 4 beinhaltet einen Stator 13 und einen Rotor 14. Der Rotor 14 ist drehfest mit der Abtriebswelle 5 verbunden. Ein Antriebsmotorgehäuse 15 ist drehfest an dem zweiten Gehäuseteil 22 befestigt. Der Stator 13 ist ortsfest in dem Antriebsmotorgehäuse 15 angeordnet.

Mittels des Antriebsmotors 4 kann das Antriebselement 7 in Rotation versetzt werden, was zu einer Relativdrehung des mit dem ersten Träger 2 verbundenen zweiten Stützrings 12 führt, so dass sich der erste Träger 2 und der zweite Träger 3 relativ zueinander bewegen.

Das motorisierte Gelenk 1 weist außerdem eine Feststellvorrichtung 16 auf, die dazu ausgebildet und angeordnet ist, den als Abtriebselement 17 fungierenden zweiten Stützring 12 zu arretieren. Die Feststellvorrichtung 16 kann in einen Arretierzustand, in dem die Feststellvorrichtung 16 das Gelenk 1 arretiert, oder alternativ in einen Freigabezustand, in dem die Feststellvorrichtung 16 das Gelenk 1 nicht arretiert, umgeschaltet werden.

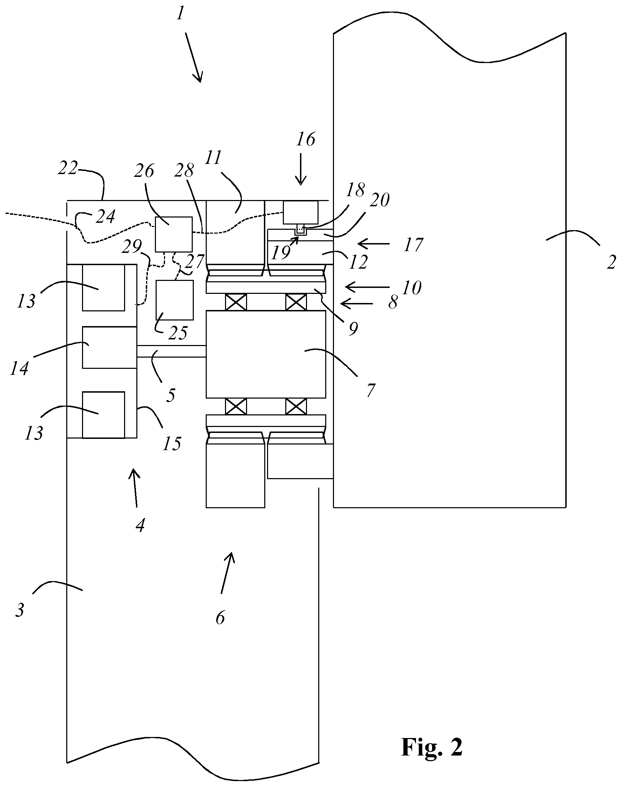

Dies kann, wie in Figur 2 schematisch dargestellt ist, beispielsweise dergestalt erfolgen, dass ein in radialer Richtung beweglicher Sperrstift 18 in eine Rastausnehmung 19 eines reibschlüssig mit dem zweiten Stützring 12 verbundenen Sperrmittels 20 eingreift. Zum Lösen der Feststellvorrichtung wird der Sperrstift 18, beispielsweise durch Magnetkraft, radial nach außen bewegt, wodurch das freie Ende des Sperrstiftes 18 und die Rastausnehmung 19 außer Eingriff kommen.

Die Feststellvorrichtung 16 ist drehfest in dem Gehäuse 22 und drehfest zu dem zweiten Träger 3 angeordnet. Insoweit kann ein bei einem Bremsvorgang auftretendes Bremsmoment unmittelbar auf das Gehäuse 22 abgeleitet werden, ohne dass es zu einer Belastung der übrigen Bauteile des Getriebes 6 kommt. Insbesondere ist die Abtriebswelle 5 des Antriebsmotors 4 bei einem Abbremsvorgang von den durch das Abbremsen hervorgerufenen Drehmomenten entkoppelt.

Das Sperrmittel 20 weist auf seinem Außenumfang verteilt mehrere Rastausnehmungen 19 auf, so dass ein Eingreifen des Sperrstiftes in unterschiedlichen Drehstellungen des zweiten Stützrings 12 ermöglicht ist.

Das motorisierte Gelenk 1 weist eine Energieleitung 24 auf, die von außen zugeführte Energie zum Betreiben und/oder Steuern der Feststellvorrichtung 16 und/oder des Antriebsmotors 4 transportiert.

Das motorisierte Gelenk 1 beinhaltet einen an die Feststellvorrichtung 16 angeschlossenen oder anschließbaren Energiespeicher 25, wobei die Feststellvorrichtung 16 zum Bewirken wenigstens eines Umschaltvorganges von dem Arretierzustand in den Freigabezustand oder von dem Freigabezustand in den Arretierzustand mit wenigstens einem Teil der in dem Energiespeicher 25 gespeicherten Energie beaufschlagbar ist.

Der Energiespeicher 25 ist dazu ausgebildet, elektrische Energie zu speichern. Beispielsweise kann der Energiespeicher 25 als Akku oder als Batterie oder als Kondensator ausgebildet sein.

Es ist eine elektronische Steuerungsvorrichtung 26 vorhanden, die die Feststellvorrichtung 16 im Bedarfsfall mit elektrischer Energie aus dem Energiespeicher 25 beaufschlagt. Die Steuerungsvorrichtung 26 ist an die Energieleitung 24 angeschlossen. Außerdem ist die Steuerungsvorrichtung 26 über eine erste Anschlussleitung 27 an den Energiespeicher 25 und über eine zweite Anschlussleitung 28 an die Feststellvorrichtung 16 und über eine dritte Anschlussleitung 29 an den Antriebsmotor 4 angeschlossen.

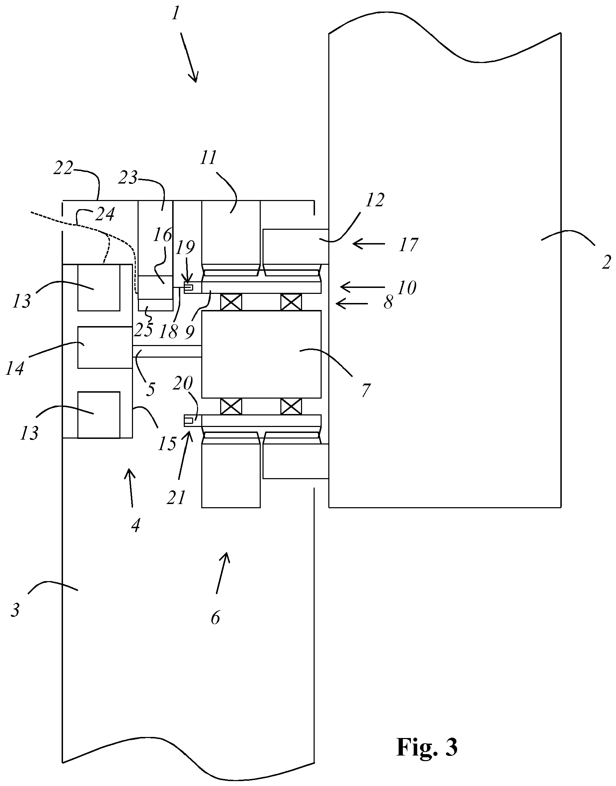

Figur 3 zeigt ein drittes Ausführungsbeispiel eines erfindungsgemäßen motorisierten Gelenks. Bei dieser Ausführung wirkt mittels eines Halters 23 die drehfest mit dem Gehäuse 22 verbundene Feststellvorrichtung auf die als Zwischenelement 10 fungierende radialflexible, außenverzahnte Büchse 9. Dies ist in der Weise realisiert, dass ein axial beweglicher Sperrstift 18 in eine Rastausnehmung 19 eines als Sperrring 21 ausgebildeten Sperrmittels 20, das reibschlüssig mit der radialflexiblen, außenverzahnten Büchse 9 verbunden ist, eingreift. Zum Lösen der Sperrvorrichtung wird das freie Ende des Sperrstiftes 18 axial aus der Rastausnehmung 19 heraus bewegt.

Das motorisierte Gelenk 1 weist eine Energieleitung 24 auf, die von außen zugeführte Energie zum Betreiben und/oder Steuern der Feststellvorrichtung 16 und/oder des Antriebsmotors 4 transportiert. Das motorisierte Gelenk 1 beinhaltet einen an die Feststellvorrichtung 16 angeschlossenen oder anschließbaren Energiespeicher 25, wobei die Feststellvorrichtung 16 zum Bewirken wenigstens eines Umschaltvorganges von dem Arretierzustand in den Freigabezustand oder von dem Freigabezustand in den Arretierzustand mit wenigstens einem Teil der in dem Energiespeicher 25 gespeicherten Energie beaufschlagbar ist.

Der Energiespeicher 25 ist dazu ausgebildet, Energie mechanisch zu speichern und beinhaltet eine (nicht dargestellte) Feder.

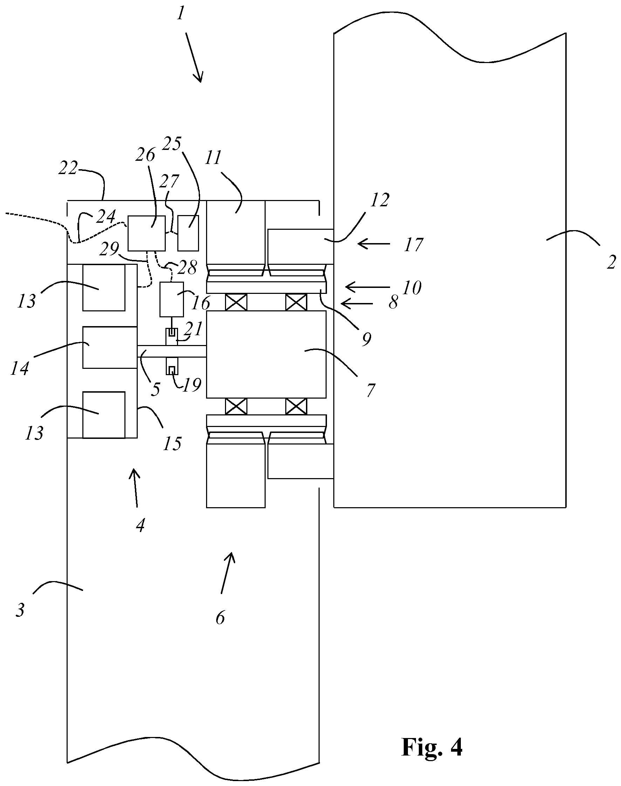

Figur 4 zeigt ein viertes Ausführungsbeispiel eines motorisierten Gelenks 1 zum Verbinden eines ersten Trägers 2 relativ zu einem zweiten Träger 3 eines programmierbaren Bewegungsautomaten. Bei diesem Ausführungsbeispiel ist die Feststellvorrichtung 16 dazu ausgebildet, die Abtriebswelle 5 des Antriebsmotors 4 im Bedarfsfall zu arretieren. Ein Sperrstift 18 der Feststellvorrichtung 16 greift im Arretierzustand in eine von mehreren Rastausnehmungen 19 eines koaxial zur Abtriebswelle 5 angeordneten Sperrrings 21 ein, der drehfest, insbesondere reibschlüssig, mit der Abtriebswelle 5 verbundenen ist.

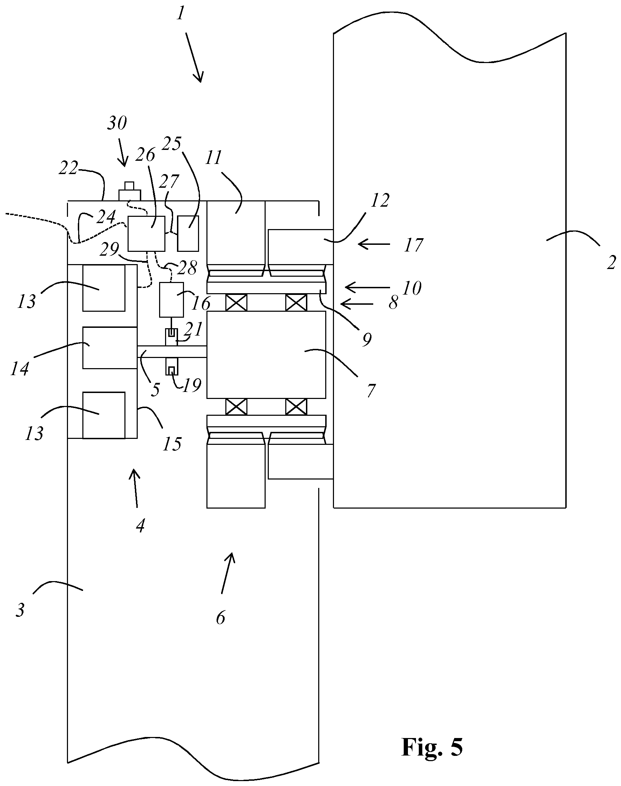

Figur 5 zeigt ein fünftes Ausführungsbeispiel eines motorisierten Gelenks 1, das im Wesentlichen so aufgebaut ist, wie das in Fig. 4 dargestellte Ausführungsbeispiel. Es ist ein Handschalter 30 vorhanden, der an die Steuerungsvorrichtung 26 angeschlossen ist. Wenn der Handschalter 30, beispielsweise bei einer Unterbrechung der Energieversorgung über die Energieleitung 24, gedrückt wird, beaufschlagt die Steuerungsvorrichtung 26 die Feststellvorrichtung 16 mit Energie auf einem Energiespeicher 25 und bewirkt so einen Umschaltvorgang von dem Arretierzustand in den Freigabezustand oder von dem Freigabezustand in den Arretierzustand. Bei dieser Ausführung kann beispielsweise ein Reparateur im Fehlerfall eine, insbesondere automatisch von der Steuerungsvorrichtung 26 bewirkte, Arretierung des Gelenks 1 aufheben, ohne dass hierfür zwingend die Energieversorgung über die Energieleitung 24 wieder hergestellt werden muss.

### Bezugszeichenliste:

- 1: Motorisiertes Gelenk
- 2: Erster Träger
- 3: Zweiter Träger
- 4: Antriebsmotor
- 5: Abtriebswelle
- 6: Getriebe
- 7: Antriebselement
- 8: Radialflexibles Wälzlager
- 9: Radialflexible, außenverzahnte Büchse
- 10: Zwischenelement
- 11: Erster Stützring
- 12: Zweiter Stützring
- 13: Stator
- 14: Rotor
- 15: Antriebsmotorgehäuse
- 16: Feststellvorrichtung
- 17: Abtriebselement
- 18: Sperrstift
- 19: Rastausnehmung
- 20: Sperrmittel
- 21: Sperrring
- 22: Gehäuse
- 23: Halter
- 24: Energieleitung
- 25: Energiespeicher
- 26: Steuerungsvorrichtung
- 27: Erste Anschlussleitung
- 28: Zweite Anschlussleitung
- 29: Dritte Anschlussleitung
- 30: Handschalter

## Patentansprüche

1. Motorisiertes Gelenk (1) zum Verbinden von zwei relativ zueinander beweglichen Trägern (2, 3) eines programmierbaren Bewegungsautomaten, das einen Antriebsmotor (4) und eine Feststellvorrichtung (16) aufweist, die in einen Arretierzustand, in dem die Feststellvorrichtung (16) das Gelenk arretiert, oder alternativ in einen Freigabezustand, in dem die Feststellvorrichtung (16) das Gelenk nicht arretiert, umschaltbar ist, und das eine Energieleitung (24) aufweist, die von außen zugeführte Energie zum Betreiben und/oder Steuern der Feststellvorrichtung (16) und/oder des Antriebsmotors (4) transportiert, wobei das motorisierte Gelenk (1) wenigstens einen an die Feststellvorrichtung (16) angeschlossenen oder anschließbaren Energiespeicher (25) beinhaltet, und wobei
a. die Feststellvorrichtung (16) zum Bewirken wenigstens eines Umschaltvorganges von dem Arretierzustand in den Freigabezustand oder von dem Freigabezustand in den Arretierzustand mit wenigstens einem Teil der in dem Energiespeicher (25) gespeicherten Energie beaufschlagbar ist, oder wobei
b. die Feststellvorrichtung (16) mit wenigstens einem Teil der in dem Energiespeicher (25) gespeicherten Energie beaufschlagbar ist, um die Feststellvorrichtung (16) in dem Arretierzustand oder in dem Freigabezustand zu halten,
und wobei die Feststellvorrichtung (16) dazu ausgebildet und angeordnet ist, unmittelbar ein, insbesondere rotierbar gelagertes, Bauteil des motorisierten Gelenks (1) zu arretieren, **dadurch gekennzeichnet, dass** die Feststellvorrichtung (16) im Arretierzustand bei Auftreten eines Drehmomentes an dem Bauteil mit einem Wert über einem vorgegebenen oder vorgebbaren Wert zur Vermeidung einer Beschädigung des Bauteiles und der weiteren im Kraftfluss liegenden Bauteile des motorisierten Gelenks (1) eine Bewegung des arretierten Bauteils zulässt.

2. Motorisiertes Gelenk (1) nach Anspruch 1, **dadurch gekennzeichnet, dass**
a. der Energiespeicher (25) dazu ausgebildet ist, elektrische Energie zu speichern, und/oder dass
b. der Energiespeicher (25) als Akku oder als Batterie oder als Kondensator oder als Superkondensator ausgebildet ist, und/oder dass
c. der Energiespeicher (25) dazu ausgebildet ist, Energie in einem elektrischen oder einem magnetischen Feld zu speichern.

3. Motorisiertes Gelenk (1) nach Anspruch 1, **dadurch gekennzeichnet, dass**
a. der Energiespeicher (25) dazu ausgebildet ist, Energie mechanisch zu speichern, und/oder dass
b. der Energiespeicher (25) wenigstens eine Feder aufweist.

4. Motorisiertes Gelenk (1) nach einem der Ansprüche 1 bis 3, **dadurch gekennzeichnet, dass**
a. eine Steuerungsvorrichtung (26) vorhanden ist, die dazu ausgebildet und angeordnet ist, die Feststellvorrichtung (16) mit Energie aus dem Energiespeicher (25) zu beaufschlagen, oder dass
b. eine Steuerungsvorrichtung (26) vorhanden ist, die dazu ausgebildet und angeordnet ist, die Feststellvorrichtung (16) mit Energie aus dem Energiespeicher (25) zu beaufschlagen, wobei die Steuerungsvorrichtung (26) mit Energie aus dem Energiespeicher (25) betrieben ist oder betreibbar ist, oder dass
c. eine Steuerungsvorrichtung (26) vorhanden ist, die dazu ausgebildet und angeordnet ist, die Feststellvorrichtung (16) mit Energie aus dem Energiespeicher (25) zu beaufschlagen, wobei ein weiterer Energiespeicher (25) zum Betreiben der Steuerungsvorrichtung (26) vorhanden ist.

5. Motorisiertes Gelenk (1) nach einem der Ansprüche 1 bis 4, **dadurch gekennzeichnet, dass**
a. die Feststellvorrichtung (16) unter Verwendung der in dem Energiespeicher (25) gespeicherten Energie umschaltbar ist, wenn eine Energiezufuhr über die Energieleitung (24) unterbrochen ist, oder dass
b. das motorisierte Gelenk (1) eine Steuerungsvorrichtung (26) aufweist, die die Feststellvorrichtung (16) automatisch unter Verwendung der in dem Energiespeicher (25) gespeicherten Energie umschaltet, sobald die Energiezufuhr über die Energieleitung (24) zu der Feststellvorrichtung (16) und/oder zu dem Antriebsmotor (4) unterbrochen wird, oder dass
c. das motorisierte Gelenk (1) eine Steuerungsvorrichtung (26) aufweist, die die Feststellvorrichtung (16) automatisch unter Verwendung der in dem Energiespeicher (25) gespeicherten Energie von dem Freigabezustand in den Arretierzustand umschaltet, sobald die Energiezufuhr über die Energieleitung (24) zu der Feststellvorrichtung (16) und/oder zu dem Antriebsmotor (4) unterbrochen wird, oder dass
d. das motorisierte Gelenk (1) eine Steuerungsvorrichtung (26) aufweist, die die Feststellvorrichtung (16) automatisch unter Verwendung der in dem Energiespeicher (25) gespeicherten Energie von dem Arretierzustand in den Freigabezustand umschaltet, sobald die Energiezufuhr über die Energieleitung (24) zu der Feststellvorrichtung (16) und/oder zu dem Antriebsmotor (4) unterbrochen wird.

6. Motorisiertes Gelenk (1) nach einem der Ansprüche 1 bis 5, **dadurch gekennzeichnet, dass**
a. die Feststellvorrichtung (16) als bistabile Feststellvorrichtung (16) ausgebildet ist, oder dass
b. die Feststellvorrichtung (16) dazu ausgebildet und angeordnet ist, unmittelbar ein, insbesondere rotierbar gelagertes, Bauteil des Antriebsmotors (4) zu arretieren.

7. Motorisiertes Gelenk (1) nach einem der Ansprüche 1 bis 6, **dadurch gekennzeichnet, dass**
a. die Feststellvorrichtung (16) als reibschlüssige Bremse ausgebildet ist oder eine reibschlüssige Bremse aufweist, und/oder dass
b. die Feststellvorrichtung (16) eine Scheibenbremse aufweist.

8. Motorisiertes Gelenk (1) nach Anspruch 7, **gekennzeichnet durch**
a. eine Bremsscheibe, die drehfest mit dem zu arretierenden Bauteil verbunden ist, und durch einen Bremskrafterzeuger, der, insbesondere mittels eines Reibelements, auf die Bremsscheibe wirkt und sich direkt oder indirekt an einem Gehäuse (22) oder einem Chassis abstützt, oder durch
b. eine Bremsscheibe, die drehfest mit dem zu arretierenden Bauteil verbunden ist, und durch einen Bremskrafterzeuger, der, insbesondere mittels eines Reibelements, auf die Bremsscheibe wirkt und sich direkt oder indirekt an einem Gehäuse (22) oder einem Chassis abstützt, wobei die Bremsscheibe drehfest, jedoch in axialer Richtung verschiebbar auf einem mit dem zu arretierenden Bauteil verbundenen Mitnehmer gelagert ist.

9. Motorisiertes Gelenk (1) nach Anspruch 8, **dadurch gekennzeichnet, dass**
a. der Bremskrafterzeuger im Arretierzustand der Feststellvorrichtung (16) ein Reibelement axial gegen die Bremsscheibe drückt oder dass
b. der Bremskrafterzeuger im Arretierzustand der Feststellvorrichtung (16) ein Reibelement radial gegen die Bremsscheibe drückt.

10. Motorisiertes Gelenk (1) nach einem der Ansprüche 1 bis 9, **dadurch gekennzeichnet, dass**
a. die Feststellvorrichtung (16) ein reibschlüssig mit einem zu arretierenden Bauteil verbundenes Sperrmittel (20) aufweist, welches wenigstens ein Formschlussmittel aufweist, das im Arretierzustand der Feststellvorrichtung (16) formschlüssig mit einem relativ zu einem Gehäuse (22) oder einem Chassis drehfesten Gegenformschlussmittel zusammen wirkt, oder dass
b. die Feststellvorrichtung (16) ein reibschlüssig mit einem zu arretierenden Bauteil verbundenes Sperrmittel (20) aufweist, welches wenigstens ein Formschlussmittel aufweist, das im Arretierzustand der Feststellvorrichtung (16) formschlüssig mit einem relativ zu einem Gehäuse (22) oder einem Chassis drehfesten Gegenformschlussmittel zusammen wirkt, wobei das Sperrmittel (20) koaxial zu dem Zwischenelement (10), dem Abtriebselement (17) oder dem drehfest mit dem Zwischenelement (10) oder dem Abtriebselement (17) verbundenen Bauteil angeordnet ist.

11. Motorisiertes Gelenk (1) nach Anspruch 10, **dadurch gekennzeichnet, dass**
a. ein Vorspannmittel zum Erzeugen oder zum Erhöhen der Reibkraft vorhanden ist, oder dass
b. ein Vorspannmittel zum Erzeugen oder zum Erhöhen der Reibkraft vorhanden ist, wobei das Vorspannmittel das Sperrmittel (20), insbesondere axial, gegen das zu arretierende Bauteil drückt, oder dass
c. ein Vorspannmittel zum Erzeugen oder zum Erhöhen der Reibkraft vorhanden ist, wobei das Sperrmittel (20) über das Vorspannmittel reibschlüssig mit dem zu arretierenden Bauteil verbunden ist und sich das Vorspannmittel einerseits an dem Sperrmittel (20) und andererseits an dem zu arretierenden Bauteil abstützt, oder dass
d. ein Vorspannmittel zum Erzeugen oder zum Erhöhen der Reibkraft vorhanden ist, wobei das Vorspannmittel einstellbar ausgebildet ist, oder dass
e. ein Vorspannmittel zum Erzeugen oder zum Erhöhen der Reibkraft vorhanden ist, wobei das Vorspannmittel wenigstens ein Federelement aufweist und wenigstens ein Teil der Reibkraft durch eine Rückstellkraft des vorgespannten Federelements bewirkt ist, und/oder dass
f. ein Vorspannmittel zum Erzeugen oder zum Erhöhen der Reibkraft vorhanden ist, wobei das Vorspannmittel eine Tellerfeder oder ein gewelltes und/oder elastisches und/oder zylinderförmig gebogenes Band insbesondere Blechband, oder einen geschlitzten Ring aufweist.

12. Motorisiertes Gelenk (1) nach Anspruch 10 oder 11, **dadurch gekennzeichnet, dass** das Gegenformschlussmittel einen, insbesondere radial oder axial, bewegbaren Sperrstift (18) aufweist, dessen freies Ende in dem Arretierzustand der Feststellvorrichtung (16) in eine Rastausnehmung (19) des Formschlussmittels eingreift.

13. Motorisiertes Gelenk (1) nach einem der Ansprüche 1 bis 12, **dadurch gekennzeichnet, dass**
a. dem Antriebsmotor (4) ein Getriebe (6) triebtechnisch nachgeschaltet ist, oder dass
b. dem Antriebsmotor (4) ein Getriebe (6) triebtechnisch nachgeschaltet ist, wobei die Feststellvorrichtung (16) dazu ausgebildet und angeordnet ist, unmittelbar ein, insbesondere rotierbar gelagertes, Getriebebauteil zu arretieren, oder dass
c. dem Antriebsmotor (4) ein Getriebe (6) triebtechnisch nachgeschaltet ist, das als Spannungswellengetriebe ausgebildet ist, oder dass
d. dem Antriebsmotor (4) ein Getriebe (6) triebtechnisch nachgeschaltet ist, das Getriebe als Spannungswellengetriebe ausgebildet ist, wobei das mittels des Feststellvorrichtung (16) arretierbare Getriebebauteil ein Wellengenerator des Spannungswellengetriebes ist oder dass das mittels des Feststellvorrichtung (16) arretierbare Getriebebauteil ein Flexspline des Spannungswellengetriebes ist oder dass das mittels des Feststellvorrichtung (16) arretierbare Getriebebauteil ein Circularspline oder ein Dynamicspline des Spannungswellengetriebes ist, oder dass
e. dem Antriebsmotor (4) ein Getriebe (6) triebtechnisch nachgeschaltet ist, das als Planetengetriebe ausgebildet ist.

14. Programmierbarer Bewegungsautomat mit zwei mittels eines motorisierten Gelenks nach einem der Ansprüche 1 bis 13 relativ zueinander beweglich verbundenen Trägern (2, 3).

15. Programmierbarer Bewegungsautomat nach Anspruch 14, **dadurch gekennzeichnet, dass** einer der Träger (2) direkt oder indirekt drehfest mit einem Stator (13) des Antriebsmotors (4) und/oder einem Antriebsmotorgehäuse (15) des Antriebsmotors (4) verbunden ist und dass der andere Träger (3) drehfest an das Abtriebselement (17) des Getriebes (6) angekoppelt ist, oder dass die zwei mittels des motorisierten Gelenks beweglich verbundenen Träger Teil eines Roboterarmes sind.

## Claims

1. Motorized joint (1) for connecting two carriers (2, 3), movable relative to one another, of a programmable automatic moving device which has a drive motor (4) and a locking device (16), which can be changed over to a locked state in which the locking device (16) locks the joint or alternatively to a released state in which the locking device (16) does not lock the joint, and has an power line (24) which transports externally supplied power for operating and/or controlling the locking device (16) and/or the drive motor (4), wherein the motorized joint (1) contains at least one energy store (25) which is connected or can be connected to the locking device (16), and wherein
a. at least a portion of the energy stored in the energy store (25) can be applied to the locking device (16) for initiating at least one changeover process from the locked state to the released state or from the released state to the locked state, or wherein
b. at least one portion of the energy stored in the energy store (25) can be applied to the locking device (16) in order to hold the locking device (16) in the locked state or in the released state,
and wherein the locking device (16) is designed and arranged to directly lock an, in particular rotatably mounted, component of the motorized joint (1), **characterized in that** the locking device (16), in the locked state, permits a movement of the locked component when a torque occurs on the component with a value above a prespecified or prespecifiable value for preventing damage to the component and the further components of the motorized joint (1) which are situated in the power train.

2. Motorized joint (1) according to Claim 1, **characterized in that**
a. the energy store (25) is designed to store electrical energy, and/or **in that**
b. the energy store (25) is designed as a rechargeable battery or as a battery or as a capacitor or as a supercap, and/or **in that**
c. the energy store (25) is designed to store energy in an electric or a magnetic field.

3. Motorized joint (1) according to Claim 1, **characterized in that**
a. the energy store (25) is designed to store energy mechanically, and/or **in that**
b. the energy store (25) has at least one spring.

4. Motorized joint (1) according to one of Claims 1 to 3, **characterized in that**
a. a control device (26) is provided and is designed and arranged to supply energy from the energy store (25) to the locking device (16), or **in that**
b. a control device (26) is provided and is designed and arranged to supply energy from the energy store (25) to the locking device (16), where the control device (26) is operated or can be operated with energy from the energy store (25), or **in that**
c. a control device (26) is provided and is designed and arranged to supply energy from the energy store (25) to the locking device (16), where a further energy store (25) is provided for operating the control device (26).

5. Motorized joint (1) according to one of Claims 1 to 4, **characterized in that**
a. the locking device (16) can be changed over using the energy stored in the energy store (25) when a power supply via the power line (24) is interrupted, or **in that**
b. the motorized joint (1) has a control device (26) which changes over the locking device (16) automatically using the energy stored in the energy store (25) as soon as the power supply via the power line (24) to the locking device (16) and/or to the drive motor (4) is interrupted, or **in that**
c. the motorized joint (1) has a control device (26) which changes over the locking device (16) from the released state to the locked state automatically using the energy stored in the energy store (25) as soon as the power supply via the power line (24) to the locking device (16) and/or to the drive motor (4) is interrupted, or **in that**
d. the motorized joint (1) has a control device (26) which changes over the locking device (16) from the locked state to the released state automatically using the energy stored in the energy store (25) as soon as the power supply via the power line (24) to the locking device (16) and/or to the drive motor (4) is interrupted.

6. Motorized joint (1) according to one of Claims 1 to 5, **characterized in that**
a. the locking device (16) is designed as a bistable locking device (16), or **in that**
b. the locking device (16) is designed and arranged to directly lock an, in particular rotatably mounted, component of the drive motor (4).

7. Motorized joint (1) according to one of Claims 1 to 6, **characterized in that**
a. the locking device (16) is designed as a frictional brake or has a frictional brake, and/or **in that**
b. the locking device (16) has a disc brake.

8. Motorized joint (1) according to Claim 7, **characterized by**
a. a brake disc which is connected in a rotationally fixed manner to the component to be locked, and by a braking force generator which, in particular by means of a frictional element, acts on the brake disc and is directly or indirectly supported on a housing (22) or a chassis, or by
b. a brake disc which is connected in a rotationally fixed manner to the component to be locked, and by a braking force generator which, in particular by means of a frictional element, acts on the brake disc and is directly or indirectly supported on a housing (22) or a chassis, where the brake disc is mounted in a rotationally fixed manner, but such that it is displaceable in the axial direction, on a driver connected to the component to be locked.

9. Motorized joint (1) according to Claim 8, **characterized in that**
a. the braking force generator pushes a frictional element axially against the brake disc in the locked state of the locking device (16),
b. the braking force generator pushes a frictional element radially against the brake disc in the locked state of the locking device (16).

10. Motorized joint (1) according to one of Claims 1 to 9, **characterized in that**
a. the locking device (16) has a blocking means (20) which is frictionally connected to a component to be locked and has at least one positively locking means which, in the locked state of the locking device (16), interacts in a positively locking manner with a mating positively locking means rotationally fixed relative to a housing (22) or a chassis, or **in that**
b. the locking device (16) has a blocking means (20) which is frictionally connected to a component to be locked and has at least one positively locking means which, in the locked state of the locking device (16), interacts in a positively locking manner with a mating positively locking means rotationally fixed relative to a housing (22) or a chassis, wherein the blocking means (20) is arranged coaxially to the intermediate element (10), the output element (17) or the component connected in a rotationally fixed manner to the intermediate element (10) or the output element (17).

11. Motorized joint (1) according to Claim 10, **characterized in that**
a. a pretensioning means is provided for generating or for increasing the frictional force, or **in that**
b. a pretensioning means is provided for generating or for increasing the frictional force, wherein the pretensioning means pushes the blocking means (20), in particular axially, against the component to be locked, or **in that**
c. a pretensioning means is provided for generating or for increasing the frictional force, wherein the blocking means (20) is frictionally connected to the component to be locked by means of the pretensioning means and the pretensioning means is supported on the locking means (20) at one end and on the component to be locked at the other end, or **in that**
d. a pretensioning means is provided for generating or for increasing the frictional force, wherein the pretensioning means is of adjustable design, or **in that**
e. a pretensioning means is provided for generating or for increasing the frictional force, where the pretensioning means has at least one spring element and at least a portion of the frictional force is created by a resetting force of the pretensioned spring element, and/or **in that**
f. a pretensioning means is provided for generating or for increasing the frictional force, where the pretensioning means has a plate spring or a corrugated and/or elastic and/or cylindrically bent strip, in particular sheet-metal strip, or a slotted ring.

12. Motorized joint (1) according to Claim 10 or 11, **characterized in that** the mating positively locking means has an, in particular radially or axially, movable locking pin (18), the free end of which engages into a latching recess (19) of the positively locking means in the locked state of the locking device (16).

13. Motorized joint (1) according to one of Claims 1 to 12, **characterized in that**
a. a gear mechanism (6) is connected downstream of the drive motor (4) in drive terms, or **in that**
b. a gear mechanism (6) is connected downstream of the drive motor (4) in drive terms, where the locking device (16) is designed and arranged to directly lock an, in particular rotatably mounted, gear mechanism component, or **in that**
c. a gear mechanism (6) is connected downstream of the drive motor (4) in drive terms, the gear mechanism being designed as a strain wave gear mechanism, or **in that**
d. a gear mechanism (6) is connected downstream of the drive motor (4) in drive terms, the gear mechanism being designed as a strain wave gear mechanism, where the gear mechanism component lockable by means of the locking device (16) is a wave generator of the strain wave gear mechanism, or **in that** the gear mechanism component lockable by means of the locking device (16) is a flex spline of the strain wave gear mechanism, or **in that** the gear mechanism component lockable by means of the locking device (16) is a circular spline or a dynamic spline of the strain wave gear mechanism, or **in that**
e. a gear mechanism (6) is connected downstream of the drive motor (4) in drive terms and is designed as a planetary gear mechanism.

14. Programmable automatic moving device with two carriers (2, 3) which are connected movably relative to one another by means of a motorized joint according to one of Claims 1 to 13.

15. Programmable automatic moving device according to Claim 14, **characterized in that** one of the carriers (2) is directly or indirectly connected to a stator (13) of the drive motor (4) and/or to a drive motor housing (15) of the drive motor (4) in a rotationally fixed manner, and **in that** the other carrier (3) is coupled in a rotationally fixed manner to the output element (17) of the gear mechanism (6), or **in that** the two carriers which are connected movably by means of the motorized joint are part of a robot arm.

## Revendications

1. Articulation motorisée (1) pour relier deux supports (2, 3) mobiles l'un par rapport à l'autre d'un automate de déplacement programmable, qui présente un moteur d'entraînement (4) et un dispositif d'immobilisation (16) qui peut être commuté dans un état de blocage, dans lequel le dispositif d'immobilisation (16) bloque l'articulation, ou alternativement dans un état de libération, dans lequel le dispositif d'immobilisation (16) ne bloque pas l'articulation, et qui présente une conduite d'énergie (24) qui transporte de l'énergie amenée de l'extérieur pour exploiter et/ou commander le dispositif d'immobilisation (16) et/ou le moteur d'entraînement (4), l'articulation motorisée (1) contenant au moins un accumulateur d'énergie (25) raccordé ou raccordable au dispositif d'immobilisation (16), et
a. le dispositif d'immobilisation (16) pouvant être alimenté avec au moins une partie de l'énergie stockée dans l'accumulateur d'énergie (25) pour effectuer au moins une opération de commutation de l'état de blocage à l'état de libération ou de l'état de libération à l'état de blocage, ou
b. le dispositif d'immobilisation (16) pouvant être alimenté avec au moins une partie de l'énergie stockée dans l'accumulateur d'énergie (25) pour maintenir le dispositif d'immobilisation (16) dans l'état de blocage ou dans l'état de libération,
et le dispositif d'immobilisation (16) étant configuré et agencé pour bloquer directement un composant, notamment monté rotatif, de l'articulation motorisée (1), **caractérisée en ce que** le dispositif d'immobilisation (16) autorise un déplacement du composant bloqué dans l'état de blocage en cas d'apparition d'un couple sur le composant d'une valeur supérieure à une valeur prédéfinie ou prédéfinissable pour éviter un endommagement du composant et des autres composants de l'articulation motorisée (1) se trouvant dans le flux de force.

2. Articulation motorisée (1) selon la revendication 1, **caractérisée en ce que**
a. l'accumulateur d'énergie (25) est configuré pour stocker de l'énergie électrique, et/ou **en ce que**
b. l'accumulateur d'énergie (25) est configuré sous forme d'accumulateur ou de batterie ou de condensateur ou de supercondensateur, et/ou **en ce que**
c. l'accumulateur d'énergie (25) est configuré pour stocker de l'énergie dans un champ électrique ou magnétique.

3. Articulation motorisée (1) selon la revendication 1, **caractérisée en ce que**
a. l'accumulateur d'énergie (25) est configuré pour stocker de l'énergie mécaniquement et/ou **en ce que**
b. l'accumulateur d'énergie (25) présente au moins un ressort.

4. Articulation motorisée (1) selon l'une quelconque des revendications 1 à 3, **caractérisée en ce que**
a. un dispositif de commande (26) est présent, qui est configuré et agencé pour alimenter le dispositif d'immobilisation (16) avec de l'énergie provenant de l'accumulateur d'énergie (25), ou **en ce que**
b. un dispositif de commande (26) est présent, qui est configuré et agencé pour alimenter le dispositif d'immobilisation (16) avec de l'énergie provenant de l'accumulateur d'énergie (25), le dispositif de commande (26) étant exploité ou pouvant être exploité avec de l'énergie provenant de l'accumulateur d'énergie (25), ou **en ce que**
c. un dispositif de commande (26) est présent, qui est configuré et agencé pour alimenter le dispositif d'immobilisation (16) avec de l'énergie provenant de l'accumulateur d'énergie (25), un autre accumulateur d'énergie (25) étant présent pour exploiter le dispositif de commande (26).

5. Articulation motorisée (1) selon l'une quelconque des revendications 1 à 4, **caractérisée en ce que**
a. le dispositif d'immobilisation (16) peut être commuté en utilisant l'énergie stockée dans l'accumulateur d'énergie (25) lorsqu'un apport d'énergie par l'intermédiaire de la conduite d'énergie (24) est interrompu, ou **en ce que**
b. l'articulation motorisée (1) présente un dispositif de commande (26), qui commute automatiquement le dispositif d'immobilisation (16) en utilisant l'énergie stockée dans l'accumulateur d'énergie (25) dès que l'apport d'énergie par l'intermédiaire de la conduite d'énergie (24) vers le dispositif d'immobilisation (16) et/ou vers le moteur d'entraînement (4) est interrompu, ou **en ce que**
c. l'articulation motorisée (1) présente un dispositif de commande (26), qui commute automatiquement le dispositif d'immobilisation (16) de l'état de libération à l'état de blocage en utilisant l'énergie stockée dans l'accumulateur d'énergie (25), dès que l'apport d'énergie par l'intermédiaire de la conduite d'énergie (24) vers le dispositif d'immobilisation (16) et/ou vers le moteur d'entraînement (4) est interrompu, ou **en ce que**
d. l'articulation motorisée (1) présente un dispositif de commande (26), qui commute automatiquement le dispositif d'immobilisation (16) de l'état de blocage à l'état de libération en utilisant l'énergie stockée dans l'accumulateur d'énergie (25) dès que l'apport d'énergie par l'intermédiaire de la conduite d'énergie (24) vers le dispositif d'immobilisation (16) et/ou vers le moteur d'entraînement (4) est interrompu.

6. Articulation motorisée (1) selon l'une quelconque des revendications 1 à 5, **caractérisée en ce que**
a. le dispositif d'immobilisation (16) est configuré sous forme de dispositif d'immobilisation bistable (16), ou **en ce que**
b. le dispositif d'immobilisation (16) est configuré et agencé de manière à bloquer directement un composant, notamment monté de manière rotative, du moteur d'entraînement (4).

7. Articulation motorisée (1) selon l'une quelconque des revendications 1 à 6, **caractérisée en ce que**
a. le dispositif d'immobilisation (16) est configuré sous forme de frein à friction ou présente un frein à friction, et/ou **en ce que**
b. le dispositif d'immobilisation (16) présente un frein à disque.

8. Articulation motorisée (1) selon la revendication 7, **caractérisée par**
a. un disque de frein, qui est relié de manière solidaire en rotation au composant à bloquer, et par un générateur de force de freinage qui agit sur le disque de frein, notamment au moyen d'un élément de friction, et qui s'appuie directement ou indirectement sur un carter (22) ou un châssis, ou par
b. un disque de frein, qui est relié de manière solidaire en rotation au composant à bloquer, et par un générateur de force de freinage, qui agit sur le disque de frein, notamment au moyen d'un élément de friction, et qui s'appuie directement ou indirectement sur un carter (22) ou un châssis, le disque de frein étant monté de manière solidaire en rotation, mais toutefois de manière à pouvoir coulisser dans la direction axiale, sur un entraîneur relié au composant à bloquer.

9. Articulation motorisée (1) selon la revendication 8, **caractérisée en ce que**
a. le générateur de force de freinage presse axialement un élément de friction contre le disque de frein dans l'état de blocage du dispositif d'immobilisation (16), ou **en ce que**
b. le générateur de force de freinage presse radialement un élément de friction contre le disque de frein dans l'état de blocage du dispositif d'immobilisation (16) .

10. Articulation motorisée (1) selon l'une quelconque des revendications 1 à 9, **caractérisée en ce que**
a. le dispositif d'immobilisation (16) présente un moyen d'arrêt (20) relié par friction à un composant à bloquer, lequel présente au moins un moyen de complémentarité de forme qui, dans l'état de blocage du dispositif d'immobilisation (16), coopère par complémentarité de forme avec un moyen de complémentarité de forme antagoniste solidaire en rotation par rapport à un carter (22) ou à un châssis, ou **en ce que**
b. le dispositif d'immobilisation (16) présente un moyen d'arrêt (20) relié par friction à un composant à bloquer, lequel présente au moins un moyen de complémentarité de forme qui, dans l'état de blocage du dispositif d'immobilisation (16), coopère par complémentarité de forme avec un moyen de complémentarité de forme antagoniste solidaire en rotation par rapport à un carter (22) ou à un châssis, le moyen d'arrêt (20) étant agencé coaxialement à l'élément intermédiaire (10), à l'élément de sortie (17) ou au composant relié de manière solidaire en rotation à l'élément intermédiaire (10) ou à l'élément de sortie (17).

11. Articulation motorisée (1) selon la revendication 10, **caractérisée en ce que**
a. un moyen de précontrainte est présent pour générer ou augmenter la force de friction, ou **en ce que**
b. un moyen de précontrainte est présent pour générer ou augmenter la force de friction, le moyen de précontrainte pressant le moyen d'arrêt (20), notamment axialement, contre le composant à bloquer, ou **en ce que**
c. un moyen de précontrainte est présent pour générer ou augmenter la force de friction, le moyen d'arrêt (20) étant relié par friction par l'intermédiaire du moyen de précontrainte au composant à bloquer et le moyen de précontrainte s'appuyant d'une part sur le moyen d'arrêt (20) et d'autre part sur le composant à bloquer, ou **en ce que**
d. un moyen de précontrainte est présent pour générer ou augmenter la force de friction, le moyen de précontrainte étant configuré pour être réglable, ou **en ce que**
e. un moyen de précontrainte est présent pour générer ou augmenter la force de friction, le moyen de précontrainte présentant au moins un élément de ressort et au moins une partie de la force de friction étant provoquée par une force de rappel de l'élément de ressort précontraint, et/ou **en ce que**
f. un moyen de précontrainte est présent pour générer ou augmenter la force de frottement, le moyen de précontrainte présentant une rondelle-ressort ou une bande ondulée et/ou élastique et/ou pliée en forme de cylindre, notamment une bande de tôle, ou un anneau fendu.

12. Articulation motorisée (1) selon la revendication 10 ou 11, **caractérisée en ce que** le moyen de complémentarité de forme antagoniste présente une tige d'arrêt (18) mobile, notamment radialement ou axialement, dont l'extrémité libre s'engage dans un évidement d'encliquetage (19) du moyen de complémentarité de forme dans l'état de blocage du dispositif d'immobilisation (16).

13. Articulation motorisée (1) selon l'une quelconque des revendications 1 à 12, **caractérisée en ce que**
a. une transmission (6) est montée en entraînement en aval du moteur d'entraînement (4), ou **en ce que**
b. une transmission (6) est montée en entraînement en aval du moteur d'entraînement (4), le dispositif d'immobilisation (16) étant configuré et agencé pour bloquer directement un composant de transmission, notamment monté rotatif, ou **en ce que**
c. une transmission (6) est montée en entraînement en aval du moteur d'entraînement (4), laquelle est configurée sous forme d'engrenage à onde de déformation, ou **en ce que**
d. une transmission (6) est montée en entraînement en aval du moteur d'entraînement (4), la transmission étant configurée sous forme d'engrenage à onde de déformation, le composant de transmission pouvant être bloqué au moyen du dispositif d'immobilisation (16) étant un générateur d'ondes de l'engrenage à onde de déformation ou le composant de transmission pouvant être bloqué au moyen du dispositif d'immobilisation (16) étant un Flexspline de l'engrenage à onde de déformation ou le composant de transmission pouvant être bloqué au moyen du dispositif d'immobilisation (16) étant un Circular Spline ou un Dynamic Spline de l'engrenage à onde de déformation, ou **en ce que**
e. une transmission (6) est montée en entraînement en aval du moteur d'entraînement (4), laquelle est configurée sous forme d'engrenage planétaire.

14. Automate de déplacement programmable comprenant deux supports (2, 3) reliés de manière mobile l'un par rapport à l'autre au moyen d'une articulation motorisée selon l'une quelconque des revendications 1 à 13.

15. Automate de déplacement programmable selon la revendication 14, **caractérisé en ce que** l'un des supports (2) est relié directement ou indirectement de manière solidaire en rotation à un stator (13) du moteur d'entraînement (4) et/ou à un carter de moteur d'entraînement (15) du moteur d'entraînement (4) et **en ce que** l'autre support (3) est couplé de manière solidaire en rotation à l'élément de sortie (17) de la transmission (6), ou **en ce que** les deux supports reliés de manière mobile au moyen de l'articulation motorisée font partie d'un bras de robot.
